Europäisches Patentamt

European Patent Office

Office européen des brevets

(11) Veröffentlichungsnummer: **0 175 081**
**B1**

(12) **EUROPÄISCHE PATENTSCHRIFT**

(45) Veröffentlichungstag der Patentschrift: **02.01.91**

(51) Int. Cl.⁵: **B 01 D 53/36,** B 01 J 23/86

(21) Anmeldenummer: **85108759.3**

(22) Anmeldetag: **12.07.85**

(54) Verfahren zur Abgasreinigung.

(30) Priorität: **22.08.84 DE 3430870**

(43) Veröffentlichungstag der Anmeldung:
**26.03.86 Patentblatt 86/13**

(45) Bekanntmachung des Hinweises auf die
Patenterteilung:
**02.01.91 Patentblatt 91/01**

(84) Benannte Vertragsstaaten:
**AT CH FR GB IT LI LU NL SE**

(56) Entgegenhaltungen:
**DE-A-2 627 454**
**FR-A-2 063 216**
**US-A-4 138 368**

(73) Patentinhaber: **DIDIER-WERKE AG**
**Lessingstrasse 16-18**
**D-6200 Wiesbaden (DE)**
(73) Patentinhaber: **DIDIER ENGINEERING GmbH**
**Alfredstrasse 28 Postfach 10 09 45**
**D-4300 Essen 1 (DE)**

(72) Erfinder: **Flockenhaus, Claus, Prof. Dr.**
**Tersteegenweg 16**
**D-4300 Essen 1 (DE)**
Erfinder: **Laue, Karl Heinrich**
**Bergische Strasse 41**
**D-4320 Hattingen 16 (DE)**
Erfinder: **Sander, Theo**
**Cäsarstrasse 23**
**D-4300 Essen 1 (DE)**
Erfinder: **Hackler, Erich**
**Kettwiger Weinberg 6**
**D-4300 Essen 18 (DE)**
Erfinder: **Levkov, Blagoje, Dr.**
**Rudolf-Vogt-Strasse 41**
**D-6200 Wiesbaden (DE)**
Erfinder: **Grimm, Daniel**
**Hauptstrasse 10**
**D-6229 Schlangenbad-Bärstadt (DE)**

Courier Press, Leamington Spa, England.

**EP 0 175 081 B1**

Erfinder: **Kainer, Hartmut, Dr.**
**Sauerbruchstrasse 1a**
**D-6200 Wiesbaden 12 (DE)**
Erfinder: **Stein, Hermann**
**Rossbachhöhe 40**
**D-6204 Taunusstein 4 (DE)**

(74) Vertreter: **Brückner, Raimund, Dipl.-Ing.**
**c/o Didier-Werke AG Lessingstrasse 16-18**
**D-6200 Wiesbaden (DE)**

# EP 0 175 081 B1

**Beschriebung**

Die Erfindung betrifft ein Verfahren zur Verringerung der Gehalte an Formaldehyd, Kohlenmonoxid, Stickoxid, Kohlenwasserstoffen und Blausäure in Abgasen einer Verbrennungseinrichtung, die mit flüssigem oder gasförmigen Brennstoff betrieben wird, bei dem das Abgas mit Ammoniak vermischt und über einen Katalysator geführt wird, der aus Eisenoxid und/oder einem Mischoxid aus Eisenoxid und Chromoxid besteht.

Es sind selektive katalytische Verfahren, sogenannte SCR-Verfahren, bekannt. Bei diesen wird mittels Ammoniak als Reduktionsmittel und mittels eines Katalysators eine $NO_x$-Reduzierung erreicht. Bei diesen Verfahren wird von "sauberen" Abgasen ausgegangen. Solche "sauberen" Abgase entstehen bei chemischen Anlagen, beispielsweise Salpetersäureanlagen oder Adipinsäureanlagen. Liegen jedoch Schadstoffe enthaltende Rauchgase vor, lassen sich SCR-Verfahren nicht ohne weiteres anwenden. Die Rauchgase müssen vor der Reduktion durch eine Wäsche oder auf anderem Wege, beispielsweise durch Filtern, gereinigt werden.

Weiterhin ist in der US—A 4,138,368 ein Katalysator zur Reduktion von Stickoxiden in Abgasen beschrieben, der im wesentlichen aus Alpha-$Fe_2O_3$ alleine oder als Gemisch mit einem oder mehreren Metallen aus der Gruppe Ib, Va, VIa, VIIa und VIII des periodischen Systems oder deren Verbindungen u.a. Oxide zusammengesetzt ist. Der Katalysator sind in Form eines Granulates, das das Katalysatormaterial und ggf. ein Bindemittel enthält, eingesetzt.

Aufgabe der Erfindung ist es, ein Verfahren der eingangs genannten Art vorzuschlagen, bei dem einem Reaktor das Abgas von den Schadstoffen ungereinigt zugeführt werden kann.

Erfindungsgemäß ist obige Aufgabe dadurch gelöst, daß er Katalysator in der grobporigen Struktur der natürlichen Substanzen eingesetzt wird und dem zur Abstimmung auf die gewünschte Reduktionstemperatur Chromoxid zugemischt ist.

Ein weiterer Vorteil des Verfahrens besteht darin, daß auch leichte Verschmutzungen des Abgases, beispielsweise durch Schwefelverbindungen, unverbrannten Brennstoff, Schmierstoffe oder Ruß, nicht zu einer Vergiftung des Katalysators und nicht zu dessen Verstopfung infolge von Ablagerungen führen.

Vorzugsweise liegt die Reduktionstemperatur zwischen 250°C und 450°C.

Für eine gewünschte Reduktionstemperatur von 280°C werden 12% $Cr_2O_3$ und für eine Reduktionstemperatur von 365°C werden 6% $Cr_2O_3$ und für eine Reduktionstemperatur von 450°C werden 0,03% $Cr_2O_3$ verwendet. Dadurch läßt sich das Maximum der Aktivität des Katalysators entprechend einstellen.

Das beschriebene Verfahren läßt sich beispielsweise zur Reinigung der Abgase eines Gas-Otto-Verbrennungsmotors oder eines Dieselmotors oder eines Flüssiggasbrenners einsetzen.

Weitere vorteilhafte Ausgestaltungen der Erfindung ergeben sich aus den Unteransprüchen und der folgenden Beschreibung.

In der Zeichnung zeigen:

Fig. 1 eine Anlage zur Abgasreinigung,

Fig. 2 eine zweite Anlage zur Abgasreinigung mit Abwärmenutzung, und

Fig. 3 eine dritte Anlage mit Abwärmenutzung und Abgasvorkühlung.

Das Abgas einer Verbrennungseinrichtung 1 wird direkt einem Reaktor 2 zugeführt. Dieser ist an einen Kamin 3 angeschlossen. Der Reaktor 2 weist zwei Katalysatorbetten 4 und 5 auf. Vor diesen wird dem Reaktor 2 Ammoniak zugeführt.

Als Katalysator 4, 5 wird ein Mischoxid, bestehend aus natürlich vorkommenden Substanzen, etwa folgender Zusammensetzung verwendet:

85% Fe(III)-Oxid
10% Cr(III)-Oxid
2% Cr(IV)-Oxid,

sowie Beimengungen an Kieselsäure, Alkalien und Erdalkalien.

Als Katalysator kann auch ein Eisenoxid-Katalysator, bestehend aus natürlich vorkommenden Substanzen, folgender Zusammensetzung verwendet werden:

85%—90% $Fe_2O_3$
3%—4% $Fe_3O_4$
0,5%—1,5% MnO
4%—5% $SiO_2$,

sowie Spuren von Alkali- und Erdalkali-Verbindungen.

Als Katalysator kann auch ein Katalysator verwendet werden, der aus einem Gemisch der beiden vorgenannten Katalysatoren besteht.

Dem Reaktor 2 wurden von der Verbrennungseinrichtung 1, im Beispielsfall einem Motor, Abgase folgender Zusammensetzung zugeführt:

3

70—77 Vol.-% $N_2$
4—7,2 Vol.-% $CO_2$
6,7—15 Vol.-% $H_2O$
5—11,5 Vol.-% $O_2$.

Die Abgase enthielten außerdem folgende Schadstoff-Anteile, die durch Änderungen der Brennlufttemperatur und der Motor-Einstellung variiert wurden zwischen:

2016—816 mg    $HCOH/m^3$ Abgas

2,07—0,22 mg    $HCN/m^3$ Abgas

1950—885 vppm $NO_x$

400—130 vppm CO

525—505 vppm $CH_x$

Darüberhinaus waren in den Abgasen Spuren von unverbrannten Schmierstoffen und Rußen enthalten.

Für die Inbetriebnahme der Anlage wird der Reaktor aufgeheizt. Dies geschieht durch die heißen Abgase und/oder durch ein Hilfs-Heizaggregat. Wenn die Katalysatorbetten 4 und 5 die Betriebstemperatur erreicht haben, darf Ammoniak zugegeben werden. Da die Reaktion des Ammoniaks mit den Stickoxiden exotherm ist, stellt sich am Reaktorausgang eine leichte Temperaturerhöhung ein. Bei der Reduzierung pro 1000 vppm Stickoxide ergibt sich eine Temperaturerhöhung von etwa 10°C.

Messungen des den Reaktor 2 verlassenden Abgases ergaben folgende Reduktionswirkungsgrade:

von 50% Formaldehyd    (HCOH) bis 99,9%

50% Blausäure    (HCN)    bis 95%

50% Stickoxide    $(NO_x)$    bis 96,3%

30% Kohlenmonoxid    (CO)    bis 68%

10% Kohlenwasserstoffe    $(CH_x)$    bis 30%.

Auf den Katalysatorbetten 4 und 5 konnten keine Ablagerungen von Ruß oder von sonstigen Stoffen beobachtet werden. Dies läßt sich auf die grobporige Struktur der natürlichen Substanzen zurückführen. Die Abriebfestigkeit ist bei den natürlichen Substanzen so hoch, daß durch Erschütterungen und Pulsationen kein Abrieb entsteht, der in nennenswerte Weise die Lebenszeit beeinflußt.

Bei stöchiometrischer und auch bei leicht überstöchiometrischer Dosierung des flüssigen oder gasförmigen Ammoniaks im Verhältnis zu Stickoxid- Reduzierung wurde am Reaktorausgang kein Ammoniakdurchbruch festgestellt. Selbst bei 2-facher Überdosierung des Ammoniaks blieb der Ammoniakdurchbruch unter 10 vppm.

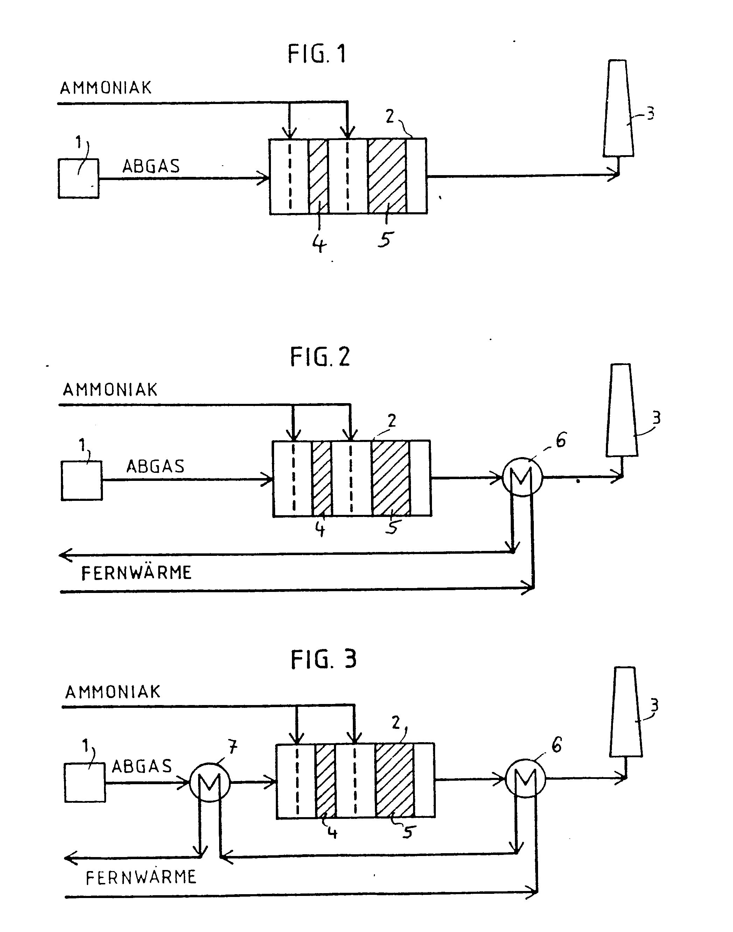

Bei der Anlage nach Figur 2 ist dem Reaktor 2 ein Wärmetauscher 6 nachgeschaltet. Dieser entzieht dem Abgas Wärme, die für ein Fernwärmenetz ausgenutzt werden kann.

Beim Ausführungsbeispiel nach Figur 3 ist dem Reaktor 2 — gegenüber Figur 2 zusätzlich — ein Wärmetauscher 7 vorgeschaltet. Dieser wird vorgesehen, wenn das von der Verbrennungseinrichtung 1 abgegebene Abgas eine Temperatur aufweist, die über der gewünschten Betriebstemperatur liegt. Auch der Wärmetauscher 7 kann seine Wärme an ein Fernwärmenetz abgeben.

Im Rahmen der Erfindung liegen zahlreiche weitere Ausführungsbeispiele. So ist es beispielsweise möglich, im Reaktor nur ein Katalysatorbrett zur verwenden.

Das Ammoniak kann dem Reaktor nicht nur gasförmig oder flüssig, sondern auch als Ammoniakwasser zugeführt werden.

**Patentansprüche**

1. Verfahren zur Verringerung der Behalte an Formaldehyd, Kohlenmonoxid, Stickoxid, Kohlenwasserstoffen und Blausäure in Abgasen einer Verbrennungseinrichtung, die mit flüssigem oder gasförmigem Brennstoff betrieben wird, bei dem das Abgas mit Ammoniak vermischt und über einen Katalysator geführt wird, der aus Eisenoxid und/oder einem Mischoxid aus Eisenoxid und Chromoxid in der grobporigen Struktur der natürlichen Substanzen besteht und dem Chromoxid zur Abstimmung auf die gewünschte Reduktionstemperatur zugemischt ist.

2. Verfahren nach Anspruch 1, dadurch gekennzeichnet, daß die Reduktionstemperatur zwischen 250°C und 450°C liegt und für eine gewünschte Reduktionstemperatur von 280°C 12% $Cr_2O_3$, von 365°C 6% $Cr_2O_3$ und von 450°C 0,03% $Cr_2O_3$ zugemischt sind.

3. Verfahren nach einem der vorhergehenden Ansprüche, dadurch gekennzeichnet, daß das Mischoxid folgende Zusammensetzung aufweist:

85% Fe(III)-Oxid
10% Cr(III)-Oxid
2% Cr(IV)-Oxid,

sowie Beimengungen von Kieselsäure, Alkalien und Erdalkalien.

4. Verfahren nach einem der vorhergehenden Ansprüche, dadurch gekennzeichnet, daß der Eisenoxid-Katalysator etwa folgende Zusammensetzung aufweist:

85%—90% $Fe_2O_3$
3%—4% $Fe_3O_4$
0,5%—1,5% MnO
%—5% $SiO_2$,

sowie Spuren von Alkali- und Erdalkali-Verbindungen.

5. Verfahren nach einem der vorhergehenden Ansprüche, dadurch gekennzeichnet, daß das Ammoniak in gasförmiger oder flüssiger Form oder als Ammoniakwasser dem Reaktor zugeführt wird.

## Revendications

1. Procédé de réduction des teneurs en formaldéhyde, monoxyde de carbone, oxyde d'azote, hydrocarbures et acide cyanhydrique dans des gaz d'échappement d'une installation de combustion alimentée en combustible liquide ou gazeux, procédé dans lequel le gaz d'échappement est mélangé avec de l'ammoniac et passe sur un catalyseur qui est constitué par de l'oxyde de fer et/ou un oxyde mixte formé d'oxyde de fer et d'oxyde de chrome, inclus dans la structure à grosses pores des substances naturelles, et auquel de l'oxyde de chrome est mélangé pour l'adaptation à la température de réduction souhaitée.

2. Procédé selon la revendication 1, caractérisé par le fait que la température de réduction se situe entre 250°C et 450°C et que, pour une température de réduction souhaitée de 280°C, on mélange 12% de $Cr_2O_3$, pour une température de 365°C on mélange 6% de $Cr_2O_3$ et pour une température de 450°C on mélange 0,03% de $Cr_2O_3$.

3. Procédé selon l'une des revendications précédentes, caractérisé par le fait que l'oxyde mixte présente la composition suivante:

85% d'oxyde de fer (III)
10% d'oxyde de chrome (III)
2% d'oxyde de chrome (IV)

et contient, comme additifs, de l'acide silicique, des alcalis et des basis alcalino-terreuses.

4. Procédé selon l'une des revendications précédentes, caractérisé par le fait que le catalyseur en oxyde de fer présente à peu près la composition suivante:

85—90% $Fe_2O_3$
3— 4% $Fe_3O_4$
0,5—1,5% MnO
4—5% $SiO_2$

et contient des traces de composés alcalins et alcalino-terreux.

5. Procédé selon l'une des revendications précédentes, caractérisé par le fait que l'ammoniac est amené au réacteur sous forme gazeuse ou liquide ou sous forme d'eau ammoniacale.

## Claims

1. Method of reducing the content of formaldehyde, carbon monoxide, nitrogen oxide, hydrocarbons and hydrocyanic acid in exhaust gases from a combustion device which is operated with liquid or gaseous fuel, in which the exhaust gas is mixed with ammonia and passed over a catalyst which comprises iron oxide and/or a mixed oxide of ion oxide and chromium oxide in the large pored structure of the natural substances and with which chromium oxide is mixed in to match it to the desired reduction temperature.

2. Method as claimed in Claim 1, characterised in that the reduction temperature is between 250°C and 450°C and for a desired reduction temperature of 280°C, 12% $Cr_2O_3$ is mixed in, of 365°C, 6% $Cr_2O_3$ is mixed in and of 450°C, 0.03% $Cr_2O_3$ is mixed in.

3. Method as claimed in one of the preceding claims, characterised in that the mixed oxide has the following composition:

$$85\% \text{ Fe (III) Oxide}$$
$$10\% \text{ Cr (III) Oxide}$$
$$2\% \text{ Cr (IV) Oxide}$$

and additions of silicic acid, alkalis and alkaline earths.

4. Method as claimed in one of the preceding claims, characterised in that the iron oxide catalyst has approximately the following composition:

$$85\% - 90\% \text{ Fe}_2\text{O}_3$$
$$3\% - 4\% \text{ Fe}_3\text{O}_4$$
$$0.5\% - 1.5\% \text{ MnO}$$
$$\tfrac{1}{2} - 5\% \text{ SiO}_2$$

and traces of alkaline and alkaline earth compounds.

5. Method as claimed in one of the preceding claims, characterised in that the ammonia is supplied to the reactor in gaseous or liquid form or as ammoniacal liquor.

6

FIG. 1

FIG. 2

FIG. 3